(19) Europäisches Patentamt
European Patent Office
Office européen des brevets

(11) Publication number: **0 157 366 B1**

(12) # EUROPEAN PATENT SPECIFICATION

(45) Date of publication of patent specification: **27.12.89**

(51) Int. Cl.⁴: **C 01 G 25/02**

(21) Application number: **85103710.1**

(22) Date of filing: **28.03.85**

(54) **Method of producing high purity zirconia powder from zircon powder.**

(30) Priority: **03.04.84 JP 65130/84
15.05.84 JP 95756/84
15.05.84 JP 95757/84
03.12.84 JP 254160/84
03.12.84 JP 254161/84**

(43) Date of publication of application:
**09.10.85 Bulletin 85/41**

(45) Publication of the grant of the patent:
**27.12.89 Bulletin 89/52**

(84) Designated Contracting States:
**DE FR GB IT SE**

(56) References cited:
**DE-C- 543 675**

**PATENT ABSTRACTS OF JAPAN, vol. 7, no. 86 (C-161)1231r, 9th April 1983; & JP - A - 58 15021 (SHOWA DENKO K.K.) 28-01-1983 (Cat. D)**

**PATENT ABSTRACTS OF JAPAN, vol. 7, no. 77 (C-159)1222r, 30th March 1983; & JP - A - 58 9808 (SHOWA DENKO K.K.) 20-01-1983**

(73) Proprietor: **KAWASAKI STEEL CORPORATION
1-1-28 Kitahonmachi-Dori Chuo-ku
Kobe-shi Hyogo-ken 651 (JP)**

(72) Inventor: **Funahashi, Toshihiko c/o High-Tec. Research Lab.
Kawasaki Steel Corporation 1, Kawasaki-cho
Chiba-shi Chiba-ken (JP)**
Inventor: **Uchimura, Ryoji c/o High-Tec. Research Lab.
Kawasaki Steel Corporation 1, Kawasaki-cho
Chiba-shi Chiba-ken (JP)**
Inventor: **Oguchi, Yukio c/o High-Tec. Research Lab.
Kawasaki Steel Corporation 1, Kawasaki-cho
Chiba-shi Chiba-ken (JP)**

(74) Representative: **Brehm, Hans-Peter, Dr. Dipl.-Chem. et al
Patentanwälte Kern, Brehm & Partner Albert-Rosshaupter-Strasse 73
D-8000 München 70 (DE)**

**EP 0 157 366 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to a method of producing a powder of high purity zirconia, which may be unstabilized zirconia or stabilized or partially stabilized zirconia, by heating a zircon powder in the presence of carbon.

Zirconia, i.e. zirconium oxide $ZrO_2$, has been used as a refractory material in the steel manufacturing and glass manufacturing industries since the melting point of this material exceeds 2700°C. Recently, zirconia is acquiring new and widening uses in various fields. For example, it serves as an important raw material for producing optical glasses, new abrasives, piezoelectric elements, solid electrolyte cells useful as oxygen sensors, ceramic capacitors or some other electronic devices.

Crystallographically, pure zirconia belongs to the monoclinic system at normal temperature. However, it is not fully stable and reversibly transforms into a tetragonal phase crystal structure at about 1100°C with a relatively large change in volume. Accordingly, practically pure zirconia is commonly called unstabilized zirconia. Due to the change in volume accompanying the transformation, a sintered body of unstabilized zirconia is not high in mechanical strength even at normal temperature. As a solution to this problem, it is well known to obtain stabilized or partially stabilized zirconia having a cubic phase crystal structure by the addition of a stabilizing oxide such as, e.g. CaO or $Y_2O_3$ which forms a solid solution with $ZrO_2$. Besides the aforementioned uses of zirconia, stabilized or partially stabilized zirconia which is high in both strength and toughness has prospective uses in the field of so-called engineering ceramics.

A popular raw material for producing zirconia is zircon, which is a zirconium silicate mineral expressed by the formula $ZrO_2 \cdot SiO_2$ or $ZrSiO_4$ and decomposes into $ZrO_2$ and $SiO_2$ at about 1530°C. Therefore, producing zirconia from zircon means separating silica from zircon.

A well known method for producing zirconia from zircon is an arc furnace fusion method in which a mixture of zircon sand, carbon and iron scrap, with the addition of a stabilizing oxide when producing stabilized zirconia, is heated in an arc furnace. Decomposition and reduction reactions and fusion of the reaction system take place, and the $SiO_2$ component separates from the $ZrO_2$ component by dissipation of the silicon oxide in reduced form into the gas phase and/or by formation of ferrosilicon by reaction with iron. This method is capable of producing zirconia at a relatively low cost and is suited to the production on a large scale. However, this method cannot provide high purity zirconia, and zirconia as the product of this method is in the form of a hard block which needs to be pulverized with consumption of large energy.

Another known method is an alklai fusion method. In this method, a mixture of zircon sand and an alkali is melted to undergo reaction which gives an alkali silicate and an alkali zirconate. The silicates can be washed away. By a process including an acid treatment the zirconate is converted into zirconium oxychloride $ZrOCl_2$, which is soluble in water and therefore can easily be converted into zirconium hydroxide. Heat treatment of thus obtained zirconium hydroxide gives zirconia in powder form. By this method it is possible to produce very high purity zirconia, but this method is low in productivity and very high in the production cost because of employing a roundabout process including many kinds of reactions.

As a still different method, Japanese Patent Applications Publication Nos. 58-9808 and 58-15021 propose to accomplish desiliconizing of zircon by heating a granulated mixture of zircon sand and carbon powder, with the addition of a stabilizing oxide if desired, in a nonoxidizing atmosphere in the presence of granular carbon which is disposed adjacent to the granules of the raw material mixture. By this heat treatment the silica component of zircon gasifies in a reduced form and then reacts with the granular carbon. Accordingly, silicon carbide is obtained together with zirconia. However, this method is relatively low in productivity and high in the energy cost because the reactions in this method need to be carried out at a very high temperature and for a long period of time, and it is difficult to obtain zirconia of high purity.

Summary of the invention

It is an object of the present invention to provide a method of efficiently and economically producing a high purity zirconia powder, which may be either unstabilized zirconia or stabilized or partially stabilized zirconia, from a zircon powder.

In essence, the present invention is a method of producing a zirconia powder, which comprises the steps of preparing a raw material mixture comprising a zircon powder and a powdery carbonaceous or carbon-containing material, and heating the raw material mixture at a temperature in the range from 1300 to 2000°C in a nonoxidizing atmosphere of which the pressure is not higher than 0.7 bar to thereby decompose and gasify the silicon oxide component of the zircon powder.

When producing stabilized or partially stabilized zirconia, the raw material mixture further comprises at least one stabilizing metal oxide or alternatively at least one metal salt which turns into such a metal oxide at a temperature not higher than the temperature employed at the aforementioned heating step.

The primary feature of the invention resides in that the desiliconizing heat treatment of a zircon-carbon mixture is carried out under reduced pressure. The mechanism of the desiliconizing is represented by the following equations.

$$ZrO_2 \cdot SiO_2(s)+C(s)\rightarrow ZrO_2(s)+SiO(g)+CO(g) \quad (1)$$

$$SiO_2(s)+C(s)\rightarrow SiO(g)+CO(g) \quad (2)$$

For continuous proceeding of the reaction of the equation (1) under the atmospheric pressure, thermodynamical calculation from the reaction of the equation (2) gives an answer that the reaction temperature must be maintained at 1750°C at the lowest. The difficulty of continuous reaction at lower temperatures is attributed mainly to the fact that the saturated vapor pressure of SiO is as low as $6.3\times10^{-2}$ bar at 1500°C and $3.5\times10^{-3}$ bar at 1300°C. When the desiliconizing heat treatment is carried out under reduced pressure, the thermodynamically lower limit of the temperature becomes considerably lower than 1750°C. By calculation from the equation (2), the lower limit of the temperature becomes 1640°C when the reaction takes place at a pressure of 0.1 bar, and further lowers to 1540°C at 0.01 bar and to 1450°C at 0.001 bar. That is, the desiliconizing heat treatment temperature can be lowered by about 100°C by reducing the pressure by one order. Therefore, the method according to the invention can achieve almost complete removal of silica from zircon by heating at a relatively low temperature and in a relatively short time. The upper limit of the pressure at the desiliconizing heat treatment is set at 0.7 bar with consideration of both the manner of dependence of the amount of residual silicon in the obtained zirconia and the convenience of practical operations. It is preferred to carry out the heat treatment at a pressure not higher than 0.6 bar. Usually good results are obtained by performing the heat treatment at a temperature in the range from 1400 to 1800°C, and this range of the heating temperature is favorable when not only the efficiency of the heat treatment but also the cost of the treatment is taken into consideration.

To obtain a zirconia powder of very high purity, the mixing ratio of a carbonaceous or carbon-containing material to zircon powder is a matter of importance, and there is an optimum range. That is, it is preferred to prepare a raw material mixture such that the mole ratio of C contained in the carbon-containing material to $SiO_2$ in the zircon powder falls in the range from 0.4 to 2.0. If the carbon-containing material contains some carbon compounds which gasify at temperatures below about 1000°C, carbon in such compounds is neglected in calculating this $C/SiO_2$ mole ratio.

It is optional whether to use the raw material mixture in the form of powder or to compact the powder mixture into suitably shaped bodies such as pellets prior to the desiliconizing heat treatment. To enhance the efficiency of the desiliconizing heat treatment and to improve the purity of the product, it is preferred to disperse at least a portion of the carbon-containing material at the stage of preparing a raw material mixture by moderately heating the mixture and/or by adding a suitable quantity of a solvent.

Sometimes a zirconia powder obtained by the desiliconizing heat treatment according to the invention contains small amounts of ZrO and/or ZrC, or solid solutions of such compounds, because usually it is necessary to use some excess of carbon compared with the theoretical quantity of achieving complete separation of silica from zircon. Therefore, it is recommended to subject the obtained zirconia powder to an oxidation treatment which is performed by heating the zirconia powder in an oxidizing atmosphere such as air at a temperature suitable for oxidation of ZrO and ZrC to $ZrO_2$. This oxidation treatment is effective also for dissipation of carbon possibly remaining in the zirconia powder into the gas phase.

With proper care in the above described points, it is possible to easily and surely obtain a zirconia powder having a purity of more than 98 wt.% by the method according to the invention.

Brief description of the drawings

Figure 1 shows the result of an experiment on the relationship between the $C/SiO_2$ mole ratio in a zircon-carbon mixture and the amount of $SiO_2$ contained in a zirconia powder obtained by desiliconizing heat treatment under reduced pressure; and

Figure 2 shows the result of an experiment on the relationship between the pressure of an argon gas atmosphere in which a zircon-carbon mixture is heated and the amount of $SiO_2$ contained in the obtained zirconia powder.

Description of the preferred embodiments

In the present invention the raw materials are not particularly limited. As the primary material it suffices to use a zircon powder obtained by pulverizing a commercially available zircon sand. To enhance the rate of the desiliconizing reaction of the equation (1), it is desirable to use a zircon powder consisting of very fine particles. To obtain high purity zirconia, it is desirable to use a zircon powder low in the content of impurity components and a carbon-containing material low in ash content. A carbonaceous or carbon-containing material can be selected from almost purely carbon materials such as petroleum coke, coal coke and carbon black, less pure carbon materials such as petroleum pitch and coal pitch, and organic materials which are carbonized by heating in a nonoxidizing atmosphere, such as phenolic resin, polyethylene and polyvinyl alcohol. The mixing of a zircon powder and a powdery carbon-containing material may be carried out by any means insofar as well mixing is accomplished.

In the case of producing stabilized or partially stabilized zirconia, at least one stabilizing metal oxide selected from MgO, CaO, $Y_2O_3$ and $CeO_2$ is added to the mixture of zircon powder and carbon-containing material. Alternative to any of these metal oxides, it is possible to use a salt of the same metal which turns into the oxide when heated to a temperature not higher than the temperature employed in the subsequent desiliconizing heat treatment. Examples of suitable metal salts are $MgCO_3$, $CaCO_3$, $Ca(OH)_2$, $YCl_3 \cdot 6H_2O$ and $Ce(NO_3)_3 \cdot 6H_2O$. It is suitable that the total amount of the stabilizing oxide(s) falls in the range from 0.5 to 20 mole % of $ZrO_2$ contained in the zircon powder. If the amount of the stabilizing oxide is smaller it is impossible to obtain fully stabilized zirconia. On the other hand, when the stabilizing oxide is more than 20

mole % of $ZrO_2$ in the zircon powder the desiliconizing heat treatment of the raw material mixture will possibly result in the formation of a crystalline phase of a complex oxide such as, e.g., $CaZr_4O_9$ or $Zr_3Y_4O_{12}$ besides a $ZrO_2$ phase. When a zirconia powder containing such a complex oxide phase is sintered, the mechanical strength of the sintered body is not so high as is expected.

The reduced pressure desiliconizing heat treatment of the raw material mixture is carried out in the manner as described hereinbefore. A nonoxidizing gas atmosphere is used to prevent oxidation of the carbon-containing material. Usually, nitrogen gas, argon gas or carbon monoxide gas is used. The heat treatment temperature ranges from 1300 to 2000°C, and preferably from 1400 to 1800°C. The duration of the heat treatment is not strictly limited and, in general, can be made shorter as the temperature is higher. When the temperature is in the preferred range of 1400—1800°C the desiliconizing can be accomplished usually in 0.5—10 hr.

As mentioned hereinbefore, it is preferable to enhance the purity of the obtained zirconia powder by an oxidation heat treatment in air. A preferred range of the heating temperature for the oxidation treatment is from 600 to 900°C, and usually it suffices to continue heating for 1—5 hr.

Example 1

Using a ball mill, 100 parts by weight of a ziron sand powder and 11.0 parts by weight of a petroleum coke powder were well mixed. The zircon powder contained 98.9 wt.% of $ZrO_2 \cdot SiO_2$ and had a mean particle size of 0.97 μm. The petroleum coke powder contained 90 wt.% of fixed carbon and was smaller than 44 μm in particle size.

The mixture in powder form was fired at 1700°C for 2 hr in an argon gas atmosphere of which the pressure was controlled to 0.7 bar. A zirconia powder obtained by this desiliconizing treatment under reduced pressure was subjected to chemical analysis and also to powder X-ray diffraction analysis to identify the existing crystal phases. The results are as shown in the following Table 1-1, wherein "$ZrO_2$(m)" stands for monoclinic zirconia. Next, the zirconia powder was heated at 800°C for 2 hr in the atmospheric air to accomplish oxidation of the impurity component. After that, chemical analysis and powder X-ray diffraction analysis were repeated. The results are shown in Table 1-1.

Examples 2—4

In these examples, the entire process of Example 1 was repeated in the same manner except that the desiliconizing heat treatment was performed under different conditions as shown in Table 1-1. The results obtained in the respective examples are also shown in Table 1-1.

Comparative Examples 1—5

Using the powder mixture described in Example 1, zirconia powder was prepared and purified generally by the procedures described in Example 1 except that the desiliconizing heat treatment was performed under variously different conditions as shown in Table 1-1. It should be noted that in Comparative Examples 1—4 the firing was carried out at a pressure higher than 0.7 bar and that in Comparative Example 5 the firing temperature was lower than 1300°C.

Comparative Example 6

Using the same raw materials as in Example 1, a zirconia powder was prepared by the method disclosed in the Japanese Specification No. 58-15021 mentioned hereinbefore. That is, the powder mixture was granulated, and the granules were fired together with carbon granules. In this case the quantity of petroleum coke added to the zircon powder was decreased to 7.3 parts by weight, and the firing was performed under the conditions shown in Table 1-1. The obtained zirconia powder was analyzed and then subjected to the oxidation treatment mentioned in Example 1 and analyzed again. The results are as shown in Table 1-1.

TABLE 1-1

| | Composition of raw mixture (parts by wt.) | | Desiliconizing firing condition | | | Crystal phases after firing | $ZrO_2$ purity after firing (wt.%) | Crystal phases after oxidation treatment | $ZrO_2$ purity after oxidation (wt.%) |
|---|---|---|---|---|---|---|---|---|---|
| | Zircon powder | Petroleum coke | Temp. (°C) | Time (hr) | Pressure (bar) | | | | |
| Ex. 1 | 100 | 11.0 | 1700 | 2 | 0.7 | $ZrO_2$(m), ZrC | 96.5 | $ZrO_2$(m) | 97.7 |
| Ex. 2 | 100 | 11.0 | 1700 | 0.5 | 0.1 | $ZrO_2$(m), ZrC | 97.2 | $ZrO_2$(m) | 98.5 |
| Ex. 3 | 100 | 11.0 | 1550 | 2 | 0.01 | $ZrO_2$(m), ZrC, ZrO | 97.5 | $ZrO_2$(m) | 98.3 |
| Ex. 4 | 100 | 11.0 | 1400 | 50 | 0.0001 | $ZrO_2$(m), ZrC, ZrO | 96.9 | $ZrO_2$(m) | 97.5 |
| Comp. Ex. 1 | 100 | 11.0 | 1800 | 2 | 1 | $ZrO_2$(m), $ZrO_2 \cdot SiO_2$ | 95.5 | $ZrO_2$(m) | 97.0 |
| Comp. Ex. 2 | 100 | 11.0 | 1800 | 0.5 | 1 | $ZrO_2$(m), $ZrO_2 \cdot SiO_2$ | 91.0 | $ZrO_2$(m), $ZrO_2 \cdot SiO_2$ | 91.3 |
| Comp. Ex. 3 | 100 | 11.0 | 1700 | 4 | 1 | $ZrO_2$(m), $ZrO_2 \cdot SiO_2$ | 89.2 | $ZrO_2$(m), $ZrO_2 \cdot SiO_2$ | 89.5 |
| Comp. Ex. 4 | 100 | 11.0 | 1700 | 2 | 0.8 | $ZrO_2$(m), $ZrO_2 \cdot SiO_2$ | 94.0 | $ZrO_2$(m), $ZrO_2 \cdot SiO_2$ | 94.3 |
| Comp. Ex. 5 | 100 | 11.0 | 1200 | 50 | 0.0001 | $ZrO_2$(m), $ZrO_2 \cdot SiO_2$ | 77.3 | $ZrO_2$(m), $ZrO_2 \cdot SiO_2$ | 77.5 |
| Comp. Ex. 6 | 100 | 7.3 | 1800 | 1 | 1 | $ZrO_2$(m), ZrC, SiC | 95.0 | $ZrO_2$(m), SiC | 96.5 |

From a comparison between the data of Examples 1—4 and the data of Comparative Examples 1—5, it will be understood that the desiliconizing method according to the invention is advantageous in the possibility of completely removing silica from zircon even at a relatively low temperature and in a relatively short period of time. The method of Comparative Example 6 gave a zirconia powder fairly high in the content of $ZrO_2$, but it was also confirmed that the existence of a small amount of SiC in the final product is inevitable.

Examples 5—9

These examples relate to the preparation of a stabilized or partially stabilized zirconia powder by a method fundamentally similar to the method of Example 1. In every case, 100 parts by weight of the zircon sand powder mentioned in Example 1 was mixed with 8.0 parts by weight of the petroleum coke powder used in Example 1 and a suitable quantity of a stabilizing oxide as shown in the following Table 1-2, and the mixture in powder form was fired at 1600°C for 2 hr in an argon gas atmosphere of which the pressure was controlled to 0.01 bar. After that the analysis and oxidation treatment of the obtained zirconia powder were carried out in accordance with Example 1. The results are shown in Table 1-2. In this Table, "$ZrO_2$(c)" and "$ZrO_2$(m)" stand for cubic zirconia and monoclinic zirconia, respectively, and every purity value indicates the total of $ZrO_2$ and the stabilizing oxide component.

The experimental data in Table 1-2 demonstrate that the desiliconizing heat treatment according to the invention is surely effective also when the raw material mixture contains a stabilizing oxide.

TABLE 1-2

| | Composition of raw mixture (parts by wt.) | | | Desiliconizing firing condition | | | | | | |
|---|---|---|---|---|---|---|---|---|---|---|
| | Zircon powder | Petro-leum coke | Stabi-lizing agent | Temp. (°C) | Time (hr) | Pressure (bar) | Crystal phases after firing | $ZrO_2$ purity after firing (wt.%) | Crystal phases after oxidation treatment | $ZrO_2$ purity after oxidation (wt.%) |
| Ex. 5 | 100 | 8.0 | MgO 3 | 1600 | 2 | 0.01 | $ZrO_2$(c), $ZrO_2$(m), ZrO | 97.3 | $ZrO_2$(c), $ZrO_2$(m) | 97.9 |
| Ex. 6 | 100 | 8.0 | CaO 5 | 1600 | 2 | 0.01 | $ZrO_2$(c) | 97.7 | $ZrO_2$(c) | 97.9 |
| Ex. 7 | 100 | 8.0 | MgO 1.7<br>CaO 2.5 | 1600 | 2 | 0.01 | $ZrO_2$(c), ZrC | 97.5 | $ZrO_2$(c), $ZrO_2$(m) | 98.0 |
| Ex. 8 | 100 | 8.0 | $Y_2O_3$ 10 | 1600 | 2 | 0.01 | $ZrO_2$(c), ZrC | 96.9 | $ZrO_2$(c), $ZrO_2$(m) | 98.1 |
| Ex. 9 | 100 | 8.0 | $CeO_2$ 15 | 1600 | 2 | 0.01 | $ZrO_2$(c) | 96.9 | $ZrO_2$(c) | 98.2 |

By detailed experimental studies on the method according to the invention, we have recognized that the efficiency of the desiliconizing heat treatment is affected by the proportion of carbon to silica in the raw material mixture and confirmed that there is an optimum range of the proportion of carbon to silica. That is, best results are obtained when the raw material mixture is prepared such that the mole ratio of C contained in the carbon material to $SiO_2$ contained in the zircon powder falls in the range from 0.4 to 2.0. In calculating this mole ratio $C/SiO_2$, carbon contained in hydrocarbons and other organic compounds that gasify at temperatures below about 1000°C is neglected since the matter of concern is the amount of carbon that participates in the silica decomposing reaction at higher temperatures. The following is a description of an experiment concerning the $C/SiO_2$ mole ratio in the desiliconizing method according to the invention.

The zircon powder used in this experiment contained 99.5 wt.% of $ZrO_2 \cdot SiO_2$ and had a mean particle size of 1.5 μm. The carbon material was a petroleum coke powder which contained 90 wt.% of fixed carbon and 0.3% of ash and was not larger than 10 μm in particle size. These materials were well mixed in various proportions to obtain a number of sample mixtures in which the $C/SiO_2$ mole ratio ranged from 0.2 to 3.0. Using a press equipped with a metal die, each sample mixture was compacted into a pellet 20 mm in diameter and 20 mm in length. In an argon gas atmosphere of which the pressure was reduced to 0.01 bar, every sample pellet was fired at 1750°C for 1 hr, and zirconia obtained by this desiliconizing heat treatment was subjected to an air oxidation treatment at 900°C for the purpose of purification. After that each sample was analyzed to determine the quantity of residual $SiO_2$. Figure 1 shows the results of this experiment.

As can be seen in Figure 1, the quantity of $SiO_2$ remaining in the produced zirconia significantly increased when the $C/SiO_2$ mole ratio was smaller than 0.4. This is because of insufficiency of carbon for completely decomposing $SiO_2$ contained in zircon. However, the content of $SiO_2$ in the final product increased also when the $C/SiO_2$ mole ratio was greater than 2.0. In such cases the amount of carbon in the raw material mixture was sufficient to reduce entire $SiO_2$ in the zircon powder to SiO, but the existence of an excessively large amount of carbon caused undesirably intense reduction reactions to form zirconium silicides such as ZrSi and/or $Zr_5Si_3$. The zirconium silicides remain in the zirconia obtained by the reduced pressure firing process and become the cause of the presence of a considerable amount of silica in the zirconia after the oxidation treatment.

Besides, we have experimentally confirmed that it is preferable to perform the desiliconizing heat treatment of the raw material mixture at a pressure not higher than 0.6 bar for obtaining a zirconia powder very low in the content of silica. In this regard, Figure 2 shows the results of an experiment which was conducted generally similarly to the above described experiment except that the $C/SiO_2$ mole ratio was constantly 1.3 and that the pressure of the argon gas atmosphere for the heat treatment was varied over a wide range.

Examples 10—15

These examples illustrate the advantages of limiting the $C/SiO_2$ mole ratio within the range from 0.4 to 2.0 and performing the desiliconizing heat treatment at a pressure not higher than 0.6 bar.

A zircon powder used in these examples containing 99.5 wt.% of $ZrO_2 \cdot SiO_2$ and had a mean particle size of 0.97 μm. The carbon material was a petroleum coke powder which contained 90 wt.% of fixed carbon and 0.3 wt.% of ash and was not larger than 44 μm in particle size. In each example the zircon powder and the petroleum coke powder were well mixed in a ball mill in a proportion as shown in the following Table 2 so as to realize a desired $C/SiO_2$ mole ratio. The powder mixture was compacted into a pellet 20 mm in diameter and 20 mm in length, and the pellet was heated in a reduced pressure argon gas atmosphere. In the respective examples, the heat treatment conditions were as shown in Table 2. In every example the zirconia powder obtained by the reduced pressure heat treatment was subjected to chemical analysis and also to powder X-ray diffraction analysis to identify the existing crystal phases. Then, the zirconia powder was heated at 900°C for 2 hr in the atmospheric air for oxidation of the impurity component. After that, chemical analysis and powder X-ray diffraction analysis were repeated. The results are as shown in Table 2. As can be seen in Table 2, when the mole ratio of fixed carbon in the petroleum coke powder to silica in the zircon powder was within the range from 0.4 to 2.0 it was possible to obtain a zirconia powder higher than 98 wt.% in purity and not higher than 1 wt.% in the content of $SiO_2$.

Comparative Example 7

A zirconia powder was produced generally by the same process as in Example 14, but the pressure of the argon gas atmosphere for the desiliconizing heat treatment was 1.0 bar. As shown in Table 2, the content of $SiO_2$ in the final produce became considerably higher than in the case of Example 14 though the $C/SiO_2$ mole ratio in the raw material mixture was unchanged.

In producing a stabilized or partially stabilized zirconia powder, the addition of a stabilizing agent to the starting materials does not affect the preferableness of limiting the $C/SiO_2$ mole ratio within the range from 0.4 to 2.0 and performing the desiliconizing heat treatment at a pressure not higher than 0.6 bar.

TABLE 2

| | Carbon in raw mixture | | Desiliconizing firing condition | | | After firing | | After oxidation treatment | | |
|---|---|---|---|---|---|---|---|---|---|---|
| | Petroleum coke (parts by wt.) | $C/SiO_2$ (mole ratio) | Temp. (°C) | Time (hr) | Pressure (bar) | Crystal phases | $ZrO_2$ purity (wt.%) | Crystal phases | $ZrO_2$ purity (wt.%) | Residual $SiO_2$ (wt.%) |
| Ex. 10 | 2.2 | 0.3 | 1700 | 1 | 0.001 | $ZrO_2$(m), $ZrO_2 \cdot SiO_2$ | 95.8 | $ZrO_2$(m), $ZrO_2 \cdot SiO_2$ | 96.0 | 3.2 |
| Ex. 11 | 3.7 | 0.4 | 1700 | 1 | 0.001 | $ZrO_2$(m), ZrO | 97.1 | $ZrO_2$(m) | 98.2 | 1.0 |
| Ex. 12 | 11.0 | 1.5 | 1700 | 1 | 0.001 | $ZrO_2$(m), ZrO, ZrC | 97.8 | $ZrO_2$(m) | 98.7 | 0.7 |
| Ex. 13 | 21.9 | 3.0 | 1700 | 1 | 0.001 | $ZrO_2$(m), ZrC, ZrSi | 92.5 | $ZrO_2$(m), $ZrO_2 \cdot SiO_2$ | 96.7 | 2.5 |
| Ex. 14 | 8.8 | 1.2 | 1650 | 1 | 0.6 | $ZrO_2$(m) | 98.0 | $ZrO_2$(m) | 98.5 | 0.9 |
| Ex. 15 | 8.8 | 1.2 | 1650 | 1 | 0.01 | $ZrO_2$(m), ZrO | 97.7 | $ZrO_2$(m) | 98.8 | 0.5 |
| Comp. Ex. 7 | 8.8 | 1.2 | 1650 | 1 | 1.0 | $ZrO_2$(m), $ZrO_2 \cdot SiO_2$ | 96.5 | $ZrO_2$(m), $ZrO_2 \cdot SiO_2$ | 97.2 | 2.2 |

Note: in every case the raw mixture contained 100 parts by weight of zircon powder.

Examples 16—24

In these examples, at least one kind of stabilizing oxide was added to a mixture of the zircon powder and petroleum coke powder used in Examples 10—15. Otherwise, the desiliconizing and oxidizing treatments and the analysis of the product were as described in Examples 10—15. The following Table 3 shows the particulars of the starting materials, desiliconizing conditions and analytical results in Examples 16—25. In Table 3, every purity value indicates the total of $ZrO_2$ and the stabilizing oxide component. In every case the raw mixture contained 100 parts by weight of zircon powder.

Comparative Example 8

As can be seen in Table 3, the starting materials and the operation conditions in Comparative Example 8 were identical with those in Example 21 except that the pressure of the argon gas atmosphere at the desiliconizing treatment was 0.8 bar. The difference in this point resulted in a considerable increase in the content of $SiO_2$ in the final product.

TABLE 3

| | Carbon in raw mixture | | Stabilizing agent (mole %) | | Desiliconizing firing condition | | | After firing | | After oxidation treatment | | |
|---|---|---|---|---|---|---|---|---|---|---|---|---|
| | Petroleum coke (parts by wt.) | $C/SiO_2$ (mole ratio) | | | Temp. (°C) | Time (hr) | Pressure (bar) | Crystal phases | $ZrO_2$ purity (wt.%) | Crystal phases | $ZrO_2$ purity (wt.%) | Residual $SiO_2$ (wt.%) |
| Ex. 16 | 11.0 | 1.5 | CaO | 0.3 | 1750 | 1 | 0.01 | $ZrO_2$(m), $ZrO_2$(c) | 97.5 | $ZrO_2$(m), $ZrO_2$(c) | 98.7 | 0.5 |
| Ex. 17 | 11.0 | 1.5 | MgO<br>$Y_2O_3$ | 2<br>3 | 1750 | 1 | 0.01 | $ZrO_2$(c), ZrO, ZrC | 97.0 | $ZrO_2$(c) | 98.7 | 0.6 |
| Ex. 18 | 11.0 | 1.5 | CaO<br>$Y_2O_3$ | 3<br>5 | 1750 | 1 | 0.01 | $ZrO_2$(c), ZrC | 97.2 | $ZrO_2$(c) | 98.8 | 0.6 |
| Ex. 19 | 11.0 | 1.5 | $CeO_2$ | 15 | 1750 | 1 | 0.01 | $ZrO_2$(c), ZrC | 97.0 | $ZrO_2$(c) | 98.9 | 0.5 |
| Ex. 20 | 2.0 | 0.3 | $Y_2O_3$ | 7 | 1600 | 1 | 0.01 | $ZrO_2$(c), $ZrO_2 \cdot SiO_2$ | 83.7 | $ZrO_2$(c), $ZrO_2 \cdot SiO_2$ | 84.1 | 15.1 |
| Comp. Ex. 8 | 8.8 | 1.2 | $Y_2O_3$ | 7 | 1600 | 1 | 0.8 | $ZrO_2$(c), $ZrO_2 \cdot SiO_2$ | 94.9 | $ZrO_2$(c), $ZrO_2 \cdot SiO_2$ | 95.5 | 3.8 |
| Ex. 21 | 8.8 | 1.2 | $Y_2O_3$ | 7 | 1600 | 1 | 0.4 | $ZrO_2$(c), ZrO | 97.1 | $ZrO_2$(c) | 98.4 | 0.8 |
| Ex. 22 | 18.3 | 2.5 | $Y_2O_3$ | 7 | 1600 | 1 | 0.01 | $ZrO_2$(c), ZrC, $Zr_5Si_3$ | 95.7 | $ZrO_2$(c), $ZrO_2$(m) | 97.3 | 2.1 |
| Ex. 23 | 6.6 | 0.9 | CaO | 10 | 1300 | 100 | 0.0001 | $ZrO_2$(c) | 97.1 | $ZrO_2$(c) | 98.3 | 1.0 |
| Ex. 24 | 6.6 | 0.9 | CaO | 10 | 1500 | 5 | 0.0001 | $ZrO_2$(c), ZrO | 97.5 | $ZrO_2$(c) | 98.7 | 0.6 |
| Ex. 25 | 6.6 | 0.9 | CaO | 10 | 1800 | 1 | 0.0001 | $ZrO_2$(c), ZrC | 97.9 | $ZrO_2$(c) | 99.3 | 0.1 |

The zirconia powders obtained in Examples 16—19 via the oxidation treatment were each press-formed into the shape of a test piece for a bending test and sintered in air at 1600°C. On these samples, a usual bending test gave the results shown in Table 4.

TABLE 4

| Sintered zirconia sample | Bending strength ($N/mm^2$) |
|---|---|
| Example 16 | 71 |
| Example 17 | 651 |
| Example 18 | 593 |
| Example 19 | 607 |

The data in Table 4 demonstrate the effect of the presence of a suitable amount of stabilizing oxide in a zirconia powder on the strength of a sintered body of the zirconia.

We have recognized the importance of uniformly mixing a carbonaceous or carbon-containing material with a zircon powder for efficient separation of silica from zircon by the reduced pressure heat treatment according to the invention. When the carbon-containing material is in the form of a fairly fine powder as in the case of petroleum coke or carbon black it is relatively easy to uniformly mix it with zircon powder. However, when using a relatively coarse powder of a carbon-containing material such as coal pitch, polyvinyl alcohol or polyethylene, simple mixing of such a powder with a zircon powder does not always give a truly uniform mixture and is liable to result in the existence of a relatively large amount of silica in the zirconia powder obtained by the desiliconizing heat treatment. In such a case it is effective to disperse at least a portion of the carbon-containing material under mixing with zircon powder. The dispersion can be done by performing the mixing at a suitably elevated temperature or in the presence of a solvent for the carbon-containing material. The two dispersing methods may be used jointly. The following is a description of an experiment on the effect of the dispersing mixing method on the quality of the produced zirconia.

The zircon powder used in this experiment contained 99.5 wt.% of $ZrO_2 \cdot SiO_2$ and had a mean particle size of 1.5 μm. As a carbon-containing material, a petroleum coke powder which contained 90 wt.% of fixed carbon and was not larger than 44 μm in particle size, powdery coal pitch which contained 70 wt.% of fixed carbon and was 50—200 μm in particle size, powdery polyvinyl alcohol which was 100—200 μm in particle size and powdery polyethylene which was 100—200 μm in particle size were alternately used. In each case the quantity of the carbon-containing material was adjusted such that the $C/SiO_2$ mole ratio in the resultant mixture became 1.3. In Run Nos. 1, 2, 5 and 7, the four kinds of carbon-containing materials were respectively mixed with the zircon powder at room temperature without using any solvent. In other runs using coal pitch, polyvinyl alcohol or polyethylene, the mixing was carried out in a heated state and/or in the presence of a small quantity of a solvent for the carbon-containing material. The particulars are shown in the following Table 5. In every run, the desiliconizing heat treatment of the raw material mixture was performed at 1600°C for 2 hr in an argon gas atmosphere of which the pressure was 0.001 bar. The obtained zirconia powder was subjected to an air oxidation treatment which was performed at 800°C for 2 hr. After that each sample was analyzed to determine the quantity of residual $SiO_2$. The results are shown in Table 5. As can be seen, the effect of fluidizing coal pitch, polyvinyl alcohol or polyethylene on the efficiency of desiliconizing was remarkable.

TABLE 5

| Run No. | C-containing material; particle size | Dispersing method | $SiO_2$ in zirconia (wt.%) |
|---|---|---|---|
| 1 | petroleum coke ≦44 μm | not dispersed | 1.1 |
| 2 | coal pitch 50—200 μm | not dispersed | 2.5 |
| 3 | ibid | heating at 150°C | 0.3 |
| 4 | ibid | adding chloroform | 0.5 |
| 5 | PVA 100—200 μm | not dispersed | 5.2 |
| 6 | ibid | adding water | 0.4 |
| 7 | polyethylene 100—200 μm | not dispersed | 6.1 |
| 8 | ibid | adding toluene and heating at 80°C | 0.3 |

Even when the dispersing mixing method is employed, there is no change in the suitableness of limiting the $C/SiO_2$ mole ratio in the raw material mixture within the range from 0.4 to 2.0. Table 6 shows the results of an experiment on this matter. In this experiment, the zircon powder and the coal pitch powder used in the above described experiment were mixed at 150°C in various proportions so as to vary the $C/SiO_2$ mole ratio over the range from 0.3 to 3.0. Each mixture was subjected to reduced pressure desiliconizing heat treatment and then to air oxidation treatment under the same conditions as in the above described experiment. After the desiliconizing treatment each sample was subjected to powder X-ray diffraction analysis to identify the existing crystal phases. After the oxidation treatment each sample was analyzed to determine the content of $SiO_2$.

TABLE 6

| Run No. | $C/SiO_2$ mole ratio | Crystal phases after desiliconizing treatment | Residual $SiO_2$ after oxidation treatment (wt.%) |
|---|---|---|---|
| 1 | 0.3 | $ZrO_2$(m), $ZrO_2 \cdot SiO_2$ | 2.7 |
| 2 | 0.4 | $ZrO_2$(m) | 0.9 |
| 3 | 0.7 | $ZrO_2$(m) | 0.3 |
| 4 | 1.0 | $ZrO_2$(m) | 0.2 |
| 5 | 1.3 | $ZrO_2$(m), ZrC, ZrO | 0.2 |
| 6 | 2.0 | $ZrO_2$(m), ZrC, ZrO | 1.0 |
| 7 | 2.5 | $ZrO_2$(m), ZrC, ZrO, ZrSi | 2.5 |
| 8 | 3.0 | $ZrO_2$(m), ZrC, ZrSi, $Zr_5Si_3$ | 4.0 |

Examples 25—33

A zircon powder used in these examples contained 99.6 wt.% of $ZrO_2 \cdot SiO_2$ and had a mean particle size of 1.5 μm. A carbon-containing material was selected from a petroleum coke powder which contained

90 wt.% of fixed carbon and was not larger than 44 µm in particle size, petroleum pitch powder which contained 66 wt.% of fixed carbon and was not larger than 200 µm in particle size and polyethylene powder which contained 75 wt.% of carbon and was not larger than 200 µm in particle size. The particulars of the respective examples were shown in the following Table 7. As can be seen, in some examples the mixing of the zircon powder and petroleum pitch or polyethylene was performed at an elevated temperature and/or in the presence of a solvent. In every case, the raw material mixture was compacted into a pellet 20 mm in diameter and 20 mm in length, and the pellet was heated at 1700°C for 2 hr in an argon atmosphere of which the pressure was 0.01 bar. The thus desiliconized material was analyzed to examine the purity of $ZrO_2$ and then heated in air at 900°C for 2 hr for oxidation of the impurity component. The finally obtained zirconia powder was analyzed to determine the quantity of residual $SiO_2$. The results are shown in Table 7.

Examples 34—41

These examples relate to the production of stabilized zirconia powder by generally the same method as in the above Examples 25—33. The zircon powder and the carbon-containing materials used in Examples 25—33 were used in these examples too, and at least one stabilizing oxide selected from CaO, MgO, $Y_2O_3$ and $CeO_2$ was added as shown in the following Table 8. In some examples the mixing of the raw materials was performed at an elevated temperature and/or with the addition of a small amount of solvent. In every example, the raw material mixture was shaped into a pellet mentioned in the foregoing examples and subjected to reduced pressure desiliconizing heat treatment under the same conditions as in Examples 25—33. After chemical analysis and powder X-ray diffraction analysis, the obtained zirconia powder was purified by the oxidation treatment described in Examples 25—33. Then, the quantity of residual $SiO_2$ was analyzed. The results were as shown in Table 8. In Table 8, "$ZrO_2$(t)" stands for tetragonal zirconia, and every value of $ZrO_2$ purity indicates the total of $ZrO_2$ and the stabilizing oxide component.

TABLE 7

| | Carbon in raw material | | | After desiliconizing firing | After oxidation treatment | |
|---|---|---|---|---|---|---|
| | Material (parts by wt.) | $C/SiO_2$ (mole ratio) | Dispersing method | $ZrO_2$ purity (wt.%) | $ZrO_2$ purity (wt.%) | Residual $SiO_2$ (wt.%) |
| Ex. 26 | petroleum coke 8.8 | 1.2 | not dispersed | 97.2 | 98.0 | 1.3 |
| Ex. 27 | petroleum pitch 12.0 | 1.2 | not dispersed | 96.5 | 97.1 | 2.1 |
| Ex. 28 | ibid | 1.2 | heating at 200°C | 98.4 | 99.2 | 0.2 |
| Ex. 29 | ibid | 1.2 | adding chloroform | 98.4 | 99.3 | 0.1 |
| Ex. 30 | ibid | 1.2 | adding toluene | 97.7 | 98.7 | 0.4 |
| Ex. 31 | polyethylene 10.5 | 1.2 | not dispersed | 93.9 | 94.5 | 4.7 |
| Ex. 32 | ibid | 1.2 | adding toluene | 98.1 | 98.9 | 0.5 |
| Ex. 33 | ibid | 1.2 | adding toluene heating at 100°C | 98.4 | 99.3 | 0.1 |

Note: in every case the raw mixture contained 100 parts by weight of zircon powder.

TABLE 8

| | Carbon material (parts by wt.) | Stabilizing Agent (mole %) | | Dispersing method | After desiliconizing firing | | After oxidation treatment | |
|---|---|---|---|---|---|---|---|---|
| | | | | | Crystal phases | $ZrO_2$ purity (wt.%) | $ZrO_2$ purity (wt.%) | Residual $SiO_2$ (wt.%) |
| Ex. 34 | petroleum pitch 12.0 | CaO | 12 | not dispersed | $ZrO_2$, $ZrO_2 \cdot SiO_2$ | 95.8 | 96.4 | 3.0 |
| Ex. 35 | ibid | ibid | | heating at 200°C | $ZrO_2$(c) | 98.2 | 98.8 | 0.5 |
| Ex. 36 | ibid | MgO | 10 | ibid | $ZrO_2$(c) | 98.2 | 98.9 | 0.4 |
| Ex. 37 | ibid | $Y_2O_3$ | 4 | ibid | $ZrO_2$(c), $ZrO_2$(t) | 98.6 | 99.3 | 0.1 |
| Ex. 38 | ibid | $CeO_2$ | 15 | ibid | $ZrO_2$(c) | 98.1 | 99.3 | 0.4 |
| Ex. 39 | ibid | CaO | 12 | adding chloroform | $ZrO_2$(c) | 98.6 | 98.6 | 0.1 |
| Ex. 40 | ibid | ibid | | adding toluene | $ZrO_2$(c) | 97.9 | 98.7 | 0.6 |
| Ex. 41 | polyethylene 10.5 | CaO<br>$Y_2O_3$ | 2<br>2 | ibid | $ZrO_2$(c), $ZrO_2$(t) | 98.3 | 99.0 | 0.3 |
| Ex. 42 | ibid | ibid | | adding toluene heating at 100°C | $ZrO_2$(c), $ZrO_2$(t) | 98.6 | 98.2 | 0.2 |

Note: in every case the raw mixture contained 100 parts by weight of zircon powder, and the mole ratio $C/SiO_2$ was 1.2.

**Claims**

1. A method of producing a zirconia powder, comprising the steps of:
preparing a raw material mixture comprising a zircon powder and a powdery carbon-containing material; and
heating said raw material mixture at a temperature in the range from 1300 to 2000°C in a non-oxidizing atmosphere of which the pressure is not higher than 0.7 bar to thereby decompose and gasify the silicon oxide component of the zircon powder.

2. A method according to claim 1, wherein the mole ratio of C which is contained in said carbon-containing material and does not gasify at temperatures below 1000°C in a non-oxidizing atmosphere to $SiO_2$ contained in said zircon powder is in the range from 0.4 to 2.0.

3. A method according to claim 2, wherein said pressure is not higher than 0.6 bar.

4. A method according to claim 3, wherein said temperature is in the range from 1400 to 1800°C.

5. A method according to claim 1, further comprising the step of heating a zirconia powder as the product of the reduced pressure heating step in an oxidizing atmosphere to thereby oxidize any unwanted zirconium compound which might be contained in said product.

6. A method according to claim 5, wherein the heating in said oxidizing atmosphere is carried out at a temperature in the range from 600 to 900°C.

7. A method according to claim 1, wherein said raw material mixture further comprises at least one metal oxide which can form a solid solution with zirconia and serves as a stabilizer for zirconia or metal salt which turns into said metal oxide at a temperature not higher than said temperature in the reduced pressure heating step.

8. A method according to claim 7, wherein said at least one metal oxide is selected from the group consisting of CaO, MgO, $Y_2O_3$ and $CeO_2$.

9. A method according to claim 8, wherein the total amount of said at least one metal oxide is in the range from 0.5 to 20 mole % of $ZrO_2$ contained in said zircon powder.

10. A method according to claim 1, wherein said carbon-containing material is selected from the group consisting of carbon black, petroleum coke, coal coke, petroleum pitch, coal pitch, phenolic resin, polyvinyl alcohol and polyethylene.

11. A method according to claim 10, wherein at least a portion of the carbon-containing material is dispersed at the stage of preparing said raw material mixture.

12. A method according to claim 11, wherein at least a portion of said carbon-containing material is dispersed by heating.

13. A method according to claim 11, wherein at least a portion of said carbon-containing material is dispersed by using a solvent for said carbon-containing material.

**Patentansprüche**

1. Ein Verfahren zur Herstellung von pulverförmigen Zirkondioxid, gekennzeichnet durch die Verfahrensschritte:
es wird eine Ausgangsmaterialmischung bereitgestellt, die Zirkonpulver und ein pulverförmiges, Kohlenstoff-haltiges Material enthält; und
diese Ausgangsmaterialmischung wird in einer nicht-oxidierenden Atmosphäre, deren Druck nicht mehr als 0,7 bar beträgt, auf eine Temperatur im Bereich von 1.300 bis 2.000°C erhitzt, um dabei die Siliziumoxid-Komponente des Zirkonpulvers zu zersetzen und zu verflüchtigen.

2. Ein Verfahren nach Anspruch 1, wobei das Molverhältnis an Kohlenstoff (C), der in dem Kohlenstoff-haltigen Material enthalten ist und bei einer Temperatur unterhalb 1.000°C in der nicht-oxidierenden Atmosphäre nicht verflüchtigbar ist, zum Anteil an in dem Zirkonpulver enthaltenen Siliziumdioxid ($SiO_2$) im Bereich von 0,4 bis 2,0 zu 1 gehalten wird.

3. Ein Verfahren nach Anspruch 2, wobei der Druck nicht mehr als 0,6 bar beträgt.

4. Ein Verfahren nach Anspruch 3, wobei die Temperatur im Bereich von 1.400 bis 1.800°C gehalten wird.

5. Ein Verfahren nach Anspruch 1, wobei zusätzlich der weitere Verfahrensschritt vorgesehen ist, daß das als Produkt der Wärmebehandlung inter vermindertem Druck erhaltenen pulverförmige Zirkondioxid in einer oxidierenden Atmosphäre erwärmt wird, um dabei irgendwelche unerwüschten Zirkonverbindungen zu oxidieren, welche in dem Produkt enthalten sein können.

6. Ein Verfahren nach Anspruch 5, wobei die Erwärmung in der oxidierenden Atmosphäre bei einer Temperatur im Bereich von 600 bis 900°C durchgeführt wird.

7. Ein Verfahren nach Anspruch 1, wobei die Ausgangsmaterialmischung zusätzlich wenigstens ein Metalloxid enthält, das mit Zirkondioxid eine Feste Lösung bilden kann und als Stabilisator für Zirkondioxid dient, oder diese Ausgangsmaterialmischung wenigstens ein Metallsalz enthält, das in ein solches Metalloxid bei einer Temperatur überführbar ist, welche nicht höher liegt, als die Temperatur der Wärmebehandlung inter vermindertem Druck.

8. Ein Verfahren nach Anspruch 7, wobei das Metalloxid Kalziumoxid (CaO), Magnesiumoxid (MgO), Yttriumoxid ($Y_2O_3$) und/oder Ceroxid ($CeO_2$) ist.

9. Ein Verfahren nach Anspruch 8, wobei der Gesamtgehalt an diesem Metalloxid im Bereich von 0,5 bis 20 Mol-% des in dem Zirkonpulver enthaltenen Zirkondioxid ($ZrO_2$) gehalten wird.

10. Ein Verfahren nach Anspruch 1, wobei das Kohlenstoff-haltige Material ausgewählt ist, aus Ruß, Petroleumkoks, Steinkohlenkoks, Erdölpech, Steichkohlenpech, Phenolharz, Polyvinylalkohol und Polyethylen.

11. Ein Verfahren nach Anspruch 10, wobei wenigstens ein Teil des Kohlenstoff-haltigen Materials bei der Bereitung der Ausgangsmaterialmischung in feinverteiltem Zustand vorliegt.

12. Ein Verfahren nach Anspruch 11, wobei wenigstens ein Teil des Kohlenstoff-haltigen Materials durch Erwärmung in den feinverteilten Zustand übergeführt wird.

13. Ein Verfahren nach Anspruch 11, wobei wenigstens ein Teil des Kohlenstoff-haltigen Materials durch Anwendung eines Lösungsmittels für das Kohlenstoff-haltige Material in den feinverteilten Zustand übergeführt wird.

**Revendications**

1. Procédé pour la production de zircone en poudre, caractérisé par les étapes de procédé:

préparer un mélange de produit de départ comprenant de la poudre de ziron et une matière carbonée en poudre;

échauffer ledit mélange de produit de départ dans une atmosphère non-oxydante dont la pression n'est pas supérieure à 0,7 bar, à une température dans la plage de 1.300°C à 2.000°C afin de décomposer et de volatiliser par ceci le composant d'oxyde de silicium de la poudre de zircon.

2. Procédé selon la revendication 1, caractérisé en ce que la relation molaire du carbone (C) qui est compris dans ladite matière carbonée et ne se volatilise pas à une température inférieure à 1.000°C dans l'atmosphère non oxydante, par rapport au dioxyde de silicium ($SiO_2$) compris dans la poudre de zircon se trouve dans la plage entre 0,4 et 2,0 à 1.

3. Procédé selon la revendication 2, caractérisé en ce que la pression n'est pas supérieure à 0,6 bar.

4. Procédé selon la revendication 3, caractérisé en ce que la température se trouve dans la plage de 1.400°C à 1.800°C.

5. Procédé selon la revendication 1, caractérisé en outre par une autre étape de procédé:

Echauffer la zircone en poudre produite par traitement thermique sous pression réduite dans un atmosphère oxydante afin d'oxyder tout composé de zircon inopportun qui pourrait être compris dans ledit produit.

6. Procédé selon la revendication 5, caractérisé en ce que l'échauffement dans l'atmosphère oxydante est réalisé dans la plage de 600°C à 900°C.

7. Procédé selon la revendication 1, caractérisé en ce que ledit mélange de produit de départ comporte en outre au moins un oxyde métallique qui peut former une solution solide avec la zircone et sert de stabilisateur pour la zircone, ou bien en ce que ledit mélange de produit de départ comporte au moins un sel métallique qui peut être transformé à une température qui ne dépasse pas celle du traitement thermique à pression réduite, en un tel oxyde métallique.

8. Procédé selon la revendication 7, caractérisé en ce que ledit oxyde métallique est de l'oxyde de calcium ($CaO$), de l'oxyde de magnésium ($MgO$), de l'oxyde d'yttrium ($Y_2O_3$) et/ou de l'oxyde cérique ($CeO_2$).

9. Procédé selon la revendication 8, caractérisé en ce que la teneur totale dudit oxyde métallique se trouve dans la plage de 0,5 à 20% molaire de la zircone ($ZrO_2$) comprise dans la poudre de zircon.

10. Procédé selon la revendication 1, caractérisé en ce que la matière carbonée est choisie parmi les matières suivantes: suie, coke de pétrole, coke de houille, brai de pétrole, brai de houille, résine phénolique, alcool polyvinylique et polyéthylène.

11. Procédé selon la revendication 10, caractérisé en ce qu'au moins une partie de la matière carbonée se présente au moment de la préparation du mélange de produit de départ en état finement dispersé.

12. Procédé selon la revendication 11, caractérisé en ce qu'au moins une partie de la matière carbonée est transformée par échauffement en l'état finement dispersé.

13. Procédé selon la revendication 11, caractérisé en ce qu'au moins une partie de la matière carbonée est transformée à l'aide d'un véhicule pour la matière carbonée, en l'état finement dispersé.

FIG.1

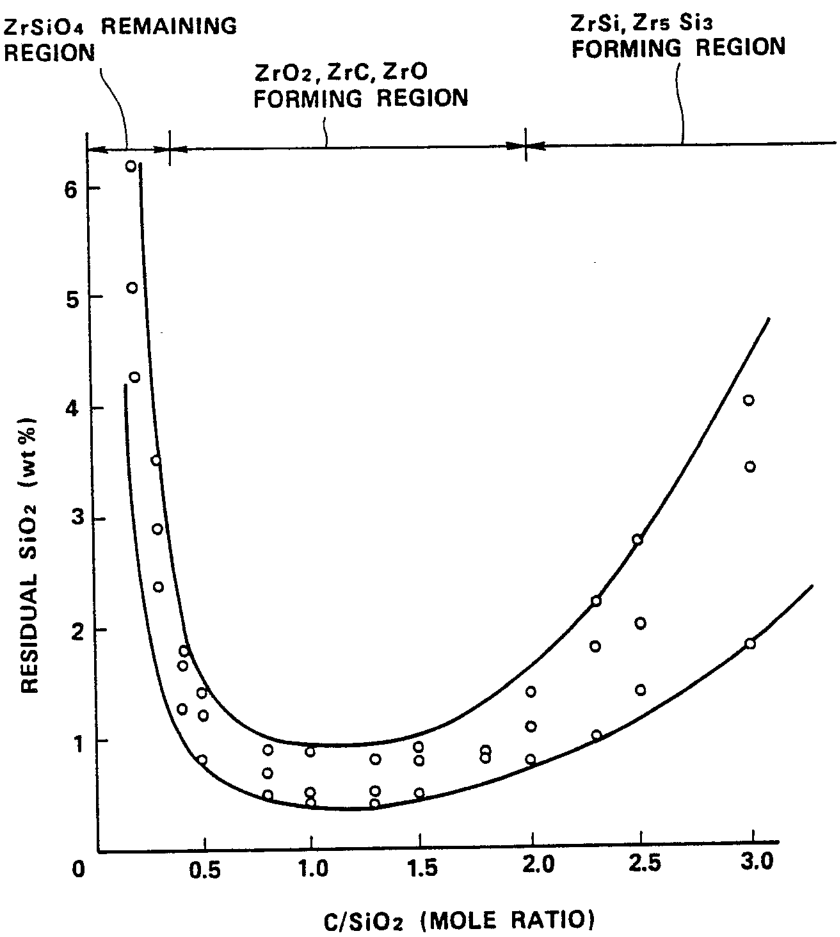
ZrSiO4 REMAINING REGION
ZrO2, ZrC, ZrO FORMING REGION
ZrSi, Zr5 Si3 FORMING REGION
RESIDUAL SiO2 (wt %)
6
5
4
3
2
1
0
0.5
1.0
1.5
2.0
2.5
3.0
C/SiO2 (MOLE RATIO)

FIG.2

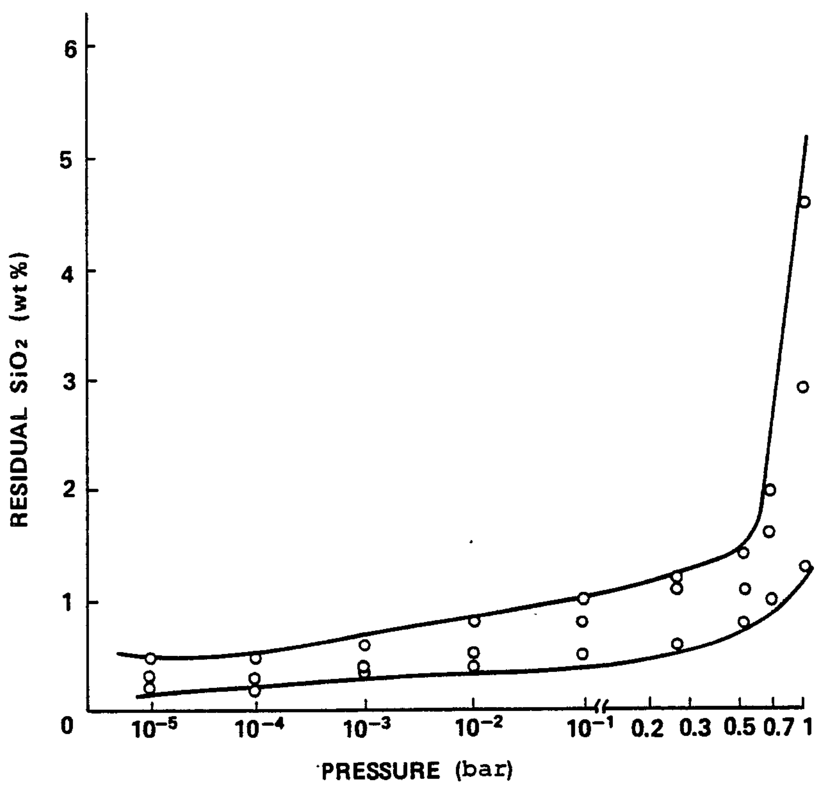
6
5
4
3
2
1
0
RESIDUAL SiO2 (wt%)
10−5
10−4
10−3
10−2
10−1
0.2
0.3
0.5
0.7
1
PRESSURE (bar)